# EUROPÄISCHE PATENTSCHRIFT

(11) **EP 2 199 643 B1**
(45) Veröffentlichungstag und Bekanntmachung des Hinweises auf die Patenterteilung: **08.06.2016**
(21) Anmeldenummer: 08172384.3
(22) Anmeldetag: 19.12.2008
(51) Int. Cl.: F16F 15/124, F16D 41/07

(54) **Drehschwingungsdämpfer und Spindel**
Torsional vibration absorber and spindle
Amortisseur de vibrations de torsion et broche

(43) Veröffentlichungstag der Anmeldung: 23.06.2010
(73) Patentinhaber: Paul Müller GmbH & Co. KG Unternehmensbeteiligungen, 90411 Nürnberg (DE)
(72) Erfinder: Feldmeier, Fritz, 90475, Nürnberg (DE)
(74) Vertreter: Lösch, Christoph Ludwig Klaus

(56) Entgegenhaltungen:
- DE-A1- 4 032 915
- US-A- 2 520 004
- US-A- 2 803 324
- US-A- 3 324 980

## Beschreibung

Die Erfindung betrifft einen Drehschwingungsdämpfer und eine Spindel.

Drehschwingungsdämpfer dienen zur Unterdrückung bzw. Verminderung von Drehschwingen, um vor allem Schwingungsamplituden klein zu halten und die Resonanzfrequenz zu beeinflussen. Unter Drehschwingungen versteht man hierbei insbesondere oszillierende Drehbewegungen um eine Achse. Sie werden angeregt durch periodische, stoßartige oder zeitlich zufällig verlaufende Drehmomente. Drehschwingungen sind allgemein unerwünschte Erscheinungen und stören den Lauf von Maschinen und können zu Störungen führen.

DE 40 32 915 A1 eine Welle-Nabe-Verbindung zur Kopplung zweier koaxial zueinander angeordneter Maschinenteile, insbesondere zur Koppelung einer zylindrischen Innenfläche eines ersten Maschinenteils mit einer zylindrischen Außenfläche eines zweiten Maschinenteils. Eine Vielzahl von Klemmkörpern wirkt mit einer Vielzahl von Zwischenelementen zusammen. Die Zwischenelemente bestehen aus einem elastischen Material.

US 3 324 980 A offenbart eine Klemmkörperkupplung mit einer Vielzahl von Klemmkörpern, die mit einer Vielzahl von Zwischenelementen zusammenwirkt. Zwischen den Klemmkörpern und den Zwischenelementen ist ein Zwischenraum vorhanden. Dieser ist in US 3 324 980 A nötig, um ein Kippen der Klemmkörper zu gewährleisten.

US 2 803 324 A und US 2 520 004 zeigen weitere Klemmkörperkupplungen mit jeweils einer Vielzahl von Klemmkörpern.

Aufgabe der vorliegenden Erfindung ist es, einen besonders einfach aufgebauten und zugleich wirkungsvollen Drehschwingungsdämpfer sowie eine besonders vorteilhaft gelagerte Spindel zur Verfügung zu stellen.

Diese Aufgabe wird für den Drehschwingungsdämpfer durch die Merkmale des Patentanspruchs 1 gelöst. Vorteilhafte Ausführungsformen des Drehschwingungsdämpfers sind in den Unteransprüchen 2 - 12 beschrieben. Für die Spindel wird die Aufgabe durch die Merkmale des Patentanspruchs 13 gelöst.

Der erfindungsgemäßen Drehschwingungsdämpfer zur Kopplung zweier koaxial zueinander angeordneter Maschinenteile, insbesondere zur Koppelung einer ersten zylindrischen Innenfläche eines ersten Maschinenteils mit einer zylindrischen Außenfläche eines zweiten Maschinenteils, weist eine Vielzahl von Klemmkörpern und eine Vielzahl von Zwischenelementen auf, wobei die Zwischenelemente eine höhere Elastizität als die Klemmkörper besitzen und zwischen benachbarten Klemmkörpern angeordnet sind.

Durch einen derartigen Aufbau wird ein Drehschwingungsdämpfer geschaffen, der zum einen sicher Drehmomente überträgt und zum anderen in bestimmten Maß drehelastisch ist. Je nach Elastizität der verwendeten Zwischenelemente bzw. Ausgestaltung der verwendeten Klemmelemente kann die Drehelastizität bzw. das maximal übertragbare Drehmoment des Drehschwingungsdämpfers beeinflusst werden.

Außerdem erhöht die im Vergleich zu den Klemmkörpern höhere Elastizität der Zwischenelemente die Verformbarkeit des Drehschwingungsdämpfers und erleichtert dadurch dessen Einbau zwischen den zu koppelnden Maschinenteilen.

Die Dämpfung von Drehschwingungen wird beim erfindungsgemäßen Drehschwingungsdämpfer insbesondere durch innere Reibung im Zwischenelement erzielt. Daher weist der Werkstoff bzw. weisen die Werkstoffe, aus denen das Zwischenelement aufgebaut ist, in bevorzugter Weise eine hohe Eigendämpfung auf. Hierbei sind insbesondere die Dämpfungseigenschaften von beispielsweise Gummi und von mit bestimmten Füllstoffen gefüllten Kunststoffen von Nutzen. In besonders bevorzugter Weise kann zur Verstärkung der Eigendämpfung der Zwischenelemente ein faseriges Material als Füllstoff innerhalb der Zwischenelemente verwendet werden.

Der Werkstoff bzw. die Werkstoffe, aus dem das Zwischenelement aufgebaut ist, besitzen in bevorzugter Weise eine Shorehärte von 50 Shore B bis 100 Shore B, insbesondere von größer 70 Shore B. Die Shore-Härte ist eine weit verbreitete Kenngröße zur Prüfung von Kunststoffen und Elastomeren und ist in den Normen DIN 53505, ISO 868 und ISO 7619 beschrieben.

Die Klemmkörper sind insbesondere als Klemmkörper wie sie in Freiläufen, d. h. in Richtungskupplungen, die in eine Richtung ein Drehmoment durch Kraftschluss übertragen bzw. abstützen und in der Gegenrichtung Leerlauf zulassen, Anwendung finden, ausgestaltet. Ferner bestehen die Klemmkörper bevorzugt aus einem metallischen Material, z.B. aus einem Stahlwerkstoff. Entsprechend weisen die Zwischenelemente dann eine Elastizität auf, die höher ist als die Elastizität von metallischen Werkstoffen.

Erfindungsgemäß füllen die Zwischenelemente den in radialer Richtung zwischen den Klemmkörpern vorhandenen Bereich, also den Zwischenraum zwischen zwei benachbarten Klemmkörpern, vollständig aus. D. h. der in Umfangsrichtung zwischen den Klemmkörpern vorhandene Bereich ist vollständig durch die Zwischenelemente ausgefüllt. Dadurch stehen die zylindrische Innenfläche bzw. die zylindrische Außenfläche der zu koppelnden Maschinenteile über ihren gesamten Umfang mit den Zwischenelementen in Kontakt. Dies führt zu einer besonders gleichmäßigen und sicheren Kontaktierung des Drehschwingungsdämpfers mit den zu koppelnden Maschinenteilen.

In einer bevorzugten Ausführungsform weist jeder Klemmkörper eine Außenkontaktfläche zur Ausbildung eines reibschlüssigen Kontakts mit einer Außenklemmbahn, insbesondere mit einer zylindrischen Innenfläche eines ersten Maschinenteils, und einer Innenkontaktfläche zur Ausbildung eines reibschlüssigen Kontakts mit einer Innenklemmbahn, insbesondere mit einer zylindrischen Außenfläche eines zweiten Maschinenteils, auf.

In vorteilhafter Weise sind die Zwischenelemente des erfindungsgemäßen Drehschwingungsdämpfers ausgebildet, die Klemmkörper in ihrer Lage zu fixieren und abzufedern. Durch ein gleichzeitiges Fixieren und Abfedern der Klemmkörper durch die Zwischenelemente ist eine besonders kompakte Bauweise des Drehschwingungsdämpfers möglich.

Bestehen die Zwischenelemente aus einem elastischen Material mit hoher Eigendämpfung, z. B. aus Kautschuk, dann führt die Kippbewegung beim Einrollen der Klemmkörper zu einer Verformung des zwischen den Klemmkörpern angeordneten dämpfenden Materials der Zwischenelemente und damit zum Entzug von Schwingungsenergie, was zu einer besonders ausgeprägten Dämpfung durch den Drehschwingungsdämpfer führt.

In einer vorteilhaften Ausführungsform sind die Zwischenelemente mit den Klemmkörpern verbunden. Insbesondere können die Zwischenelemente stoffschlüssig mit den Klemmkörpern verbunden sein, was zu einem besonders zuverlässigen und stabilen Verbund von Zwischenelementen und Klemmkörpern führt und dadurch beispielsweise die Handhabbarkeit des Drehschwingungsdämpfers verbessert. Hierbei kann die stoffschlüssige Verbindung beispielsweise als Klebeverbindung ausgeführt sein. Auch können die Zwischenelemente als Gießmasse bzw. mehrere Gießmassen ausgestaltet sein und die stoffschlüssige Verbindung durch einen Gießprozess, in dem die Klemmkörper - zumindest teilweise - durch die Gießmasse bzw. Gießmassen umschlossen werden, hergestellt werden. Auch ist es möglich, die Zwischenelemente aus einer Spritzgussmasse bzw. Spritzgussmassen herzustellen und die Zwischenelemente mit Hilfe eines Spritzgussprozesses mit den Klemmkörpern zu verbinden.

In einer weiteren vorteilhaften Ausführungsform entsprechen die Zwischenelemente in ihrer Kontur der Kontur der benachbarten Klemmkörper. Eine derartige Ausgestaltung der Kontur erlaubt eine besonders zuverlässige Verbindung zwischen dem Zwischenelement und den an diesen angrenzenden Klemmkörper.

In einer vorteilhaften Ausführungsform ist mindestens ein Klemmkörper gegenüber der radialen Richtung verkippt zwischen benachbarten Zwischenelementen angeordnet. Dadurch kann die Dämpfungswirkung sowie das maximal übertragbare Drehmoment des Drehschwingungsdämpfers von der Richtung der Relativbewegung zwischen den zu koppelnden Maschinenteilen abhängig gemacht werden.

In einer weiteren vorteilhaften Ausführungsform sind zwei benachbart zueinander angeordnete Klemmkörper jeweils in entgegengesetzter Richtung gegenüber der radialen Richtung verkippt in die Zwischenelemente eingebunden. Dadurch kann ebenfalls die Dämpfungswirkung sowie das maximal übertragbare Drehmoment des Drehschwingungsdämpfers von der Richtung der Relativbewegung zwischen den zu koppelnden Maschinenteilen abhängig gemacht werden.

In vorteilhafter Weise können die Zwischenelemente aus mehreren unterschiedlichen Werkstoffen bestehen. Hierbei ist es zum einen möglich, dass beispielsweise benachbart zueinander liegende Zwischenelemente aus unterschiedlichen Werkstoffen bestehen, zum anderen ist es auch möglich, dass ein Zwischenelement selbst aus verschiedenen Werkstoffen aufgebaut ist. Insgesamt wird dadurch die Variabilität und Anpassbarkeit des Drehschwingungsdämpfers an verschiedene Anwendungsfälle erhöht.

In einer weiteren vorteilhaften Ausführungsform variiert die Elastizität mindestens eines Zwischenelements entlang der radialen Richtung. Diese Variation in der Elastizität kann beispielsweise durch den Aufbau des Zwischenelements durch verschiedene Werkstoffe bzw. durch eine graduelle Variation der Elastizität des verwendeten Werkstoffs erreicht werden. Die Variation der Elastizität erhöht ebenfalls die Anpassbarkeit des Drehschwingungsdämpfers.

Je nach gewünschtem Einsatzgebiet und je nach gewünschter Elastizität können die Zwischenelemente in bevorzugten Ausführungsformen zumindest teilweise aus Silikonwerkstoff, aus thermoplastischen Polymeren, aus vulkanisiertem Kautschuk, aus duroplastischen Polymeren (z.B. Kunstharz) oder aus einer Mischung der vorgenannten Werkstoffe hergestellt sein. Hierbei können sämtliche Zwischenelemente die gleiche Werkstoffzusammensetzung aufweisen. Es ist jedoch auch möglich, die Werkstoffzusammensetzung von Zwischenelement zu Zwischenelement zu variieren. Dies erhöht die Variabilität des Drehschwingungsdämpfers sowie dessen Anpassbarkeit an verschiedene Anwendungsfälle.

In einer weiteren vorteilhaften Ausführungsform ist der Drehschwingungsdämpfer bandförmig ausgebildet. Hierdurch ist die Herstellung des Drehschwingungsdämpfers als endloses Band möglich. Nach der Herstellung kann der Drehschwingungsdämpfer dann auf die gewünschte Umlauflänge zerteilt und zwischen zwei koaxial zueinander angeordneten Maschinenteilen, insbesondere zwischen eine zylindrische Innenfläche eines ersten Maschinenteils und eine zylindrische Außenfläche eines zweiten Maschinenteils, eingelegt werden.

In einer weiteren vorteilhaften Ausführungsform ist der Drehschwingungsdämpfer ringförmig ausgebildet. Dadurch kann der Drehschwingungsdämpfer besonders einfach zwischen zwei koaxial angeordnete Maschinenelemente angeordnet werden.

Die erfindungsgemäße Spindel ist insbesondere als Motorspindel ausgebildet und weist einen erfindungsgemäßen Drehschwingungsdämpfer auf.

Die Erfindung ist anhand von Ausführungsbeispielen in den Zeichnungsfiguren weiter erläutert. Es zeigen:
- Fig. 1: eine erste Ausführungsform des Drehschwingungsdämpfers;
- Fig. 2: eine zweite Ausführungsform des Drehschwingungsdämpfers;
- Fig. 3: eine nicht erfindungsgemäße Ausführungsform eines Drehschwingungsdämpfers;
- Fig. 4: einen Ausschnitt aus einer nicht erfindungsgemäßen Ausführungsform eines Drehschwingungsdämpfers;
- Fig. 5: einen Ausschnitt aus einer weiteren nicht erfindungsgemäßen Ausführungsform eines Drehschwingungsdämpfers;
- Fig. 6: einen in eine Riemenscheibe eingebauten Drehschwingungsdämpfer;
- Fig. 7: einen in einen Elektromotor eingebauten Drehschwingungsdämpfer.

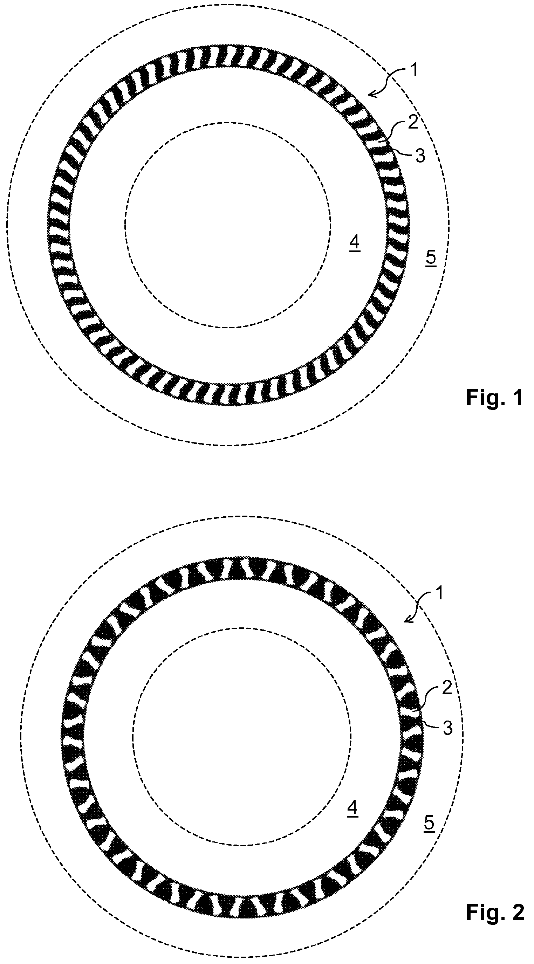

Fig. 1 zeigt einen Drehschwingungsdämpfer 1 mit einer Vielzahl von Klemmkörpern 2 und Zwischenelementen 3, wobei in den Figuren in der Regel jeweils nur ein Klemmkörper 2 und ein Zwischenelement 3 mit einem Bezugszeichen versehen ist. Der Drehschwingungsdämpfer 1 ist ringförmig ausgebildet und die Klemmkörper 2 sind gleichmäßig über den Umfang verteilt. Der Drehschwingungsdämpfer 1 ist zwischen einer zylindrischen Außenfläche eines Maschinenteils 4 und einer zylindrischen Innenfläche eines Maschinenteils 5 angeordnet. Die beiden Maschinenteile 4 und 5 sind konzentrisch zueinander ausgerichtet. Die Klemmkörper 2 sind gegenüber der radialen Richtung verkippt zwischen benachbarten Zwischenelementen 3 angeordnet. Genauer sind die Klemmkörper 2 entgegen dem Uhrzeigersinn in den Zwischenelementen 3 eingebettet, sodass insbesondere ein Drehmoment im Uhrzeigersinn übertragen werden kann.

Fig. 2 zeigt einen weiteren Drehschwingungsdämpfer 1 mit einer Vielzahl von Klemmkörpern 2 und Zwischenelementen 3. Der Drehschwingungsdämpfer 1 in Fig. 2 ist ebenfalls ringförmig ausgebildet und die Klemmkörper 2 sind gleichmäßig über den Umfang verteilt. Der Drehschwingungsdämpfer 1 ist ebenfalls zwischen einer zylindrischen Außenfläche eines Maschinenteils 4 und einer zylindrischen Innenfläche eines Maschinenteils 5 angeordnet. Jeweils zwei benachbarte Klemmkörper 2 sind hierbei gegeneinander verkippt in die Zwischenelemente eingebettet. Dadurch besteht die Möglichkeit in beide Drehrichtungen ein hohes Drehmoment zu übertragen.

In den in Fig. 1 und Fig. 2 dargestellten Drehschwingungsdämpfern 1 füllen die Zwischenelemente 3 den in radialer Richtung zwischen den Klemmkörpern 2 vorhandenen Bereich vollständig aus. Dadurch bilden sowohl die Klemmkörper 2 als auch die Zwischenelemente 3 einen Kontakt zu den entsprechenden zylindrischen Flächen der Maschinenteile 4 bzw. 5 aus und die zylindrischen Außenfläche des Maschinenteils 4 und die zylindrische Innenfläche eines Maschinenteils 5 werden über ihren gesamten Umfang - abwechselnd von einem Klemmkörper 2 und einem Zwischenelemente 3 - kontaktiert.

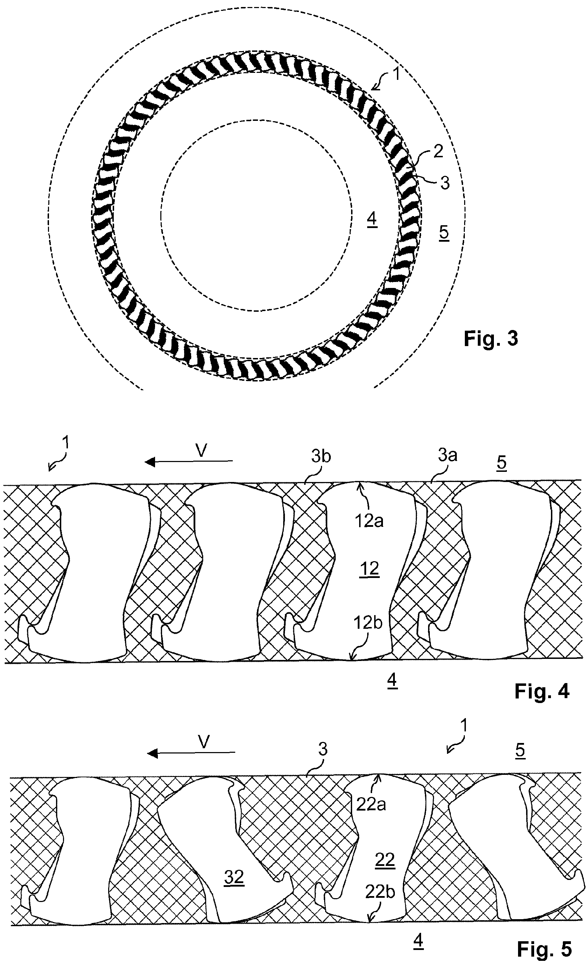

Fig. 3 zeigt eine weitere Ausführungsform des Drehschwingungsdämpfers 1 mit einer Vielzahl von äquidistant verteilten Klemmelementen 2 und Zwischenelementen 3. Im Gegensatz zu den in Fig. 1 und in Fig. 2 dargestellten Ausführungsformen füllen die Zwischenelemente 3 den in radialer Richtung zwischen den Klemmelementen 2 gelegenen Bereich nicht vollständig aus. Dadurch wird die zylindrische Außenfläche des Maschinenteils 4 bzw. die zylindrische Innenfläche des Maschinenteils 5 nur durch die Klemmelemente 2 kontaktiert und der Drehschwingungsdämpfer 1 kann zugleich als Freilauf wirken. Derartige Drehschwingungsdämpfer 1, die zugleich als Freilauf dienen können, werden im Folgenden auch als Einweg-Drehschwingungsdämpfer bezeichnet.

Fig. 4 zeigt einen Ausschnitt aus einer weiteren Ausführungsform des Drehschwingungsdämpfers 1. Der in Fig. 4 dargestellte Drehschwingungsdämpfer 1 ist bandförmig ausgebildet und kann auf die gewünschte Umlauflänge zerteilt und zwischen die zylindrische Außenfläche des Maschinenteils 4 und die zylindrische Innenfläche des Maschinenteils 5 eingelegt werden. In der in Fig. 4 dargestellten Ausführungsform füllt das Zwischenelement 3 den in Umfangsrichtung zwischen zwei benachbarten Klemmkörpern 12 gelegenen Raum im Wesentlichen vollständig aus, sodass die Kontur des Klemmkörpers 12 bis auf die Außenkontaktfläche 12a und die Innenkontaktfläche 12b vollständig mit dem Zwischenelement 3a bzw. 3b in Kontakt steht. Die Außenkontaktfläche 12a und die Innenkontaktfläche 12b bilden Klemmkontaktflächen, die mit der zylindrischen Innenfläche des Maschinenteils 5 bzw. mit der zylindrischen Außenflächen des Maschinenteils 4 einen Klemmkontakt ausbilden.

Fig. 4 zeigt die Klemmkörper 12 zugleich einer ersten Position und - die erste Position teilweise überlagernd - in einer zweiten Position. In der zweiten Position befinden sich die Klemmkörper 12, wenn die Außenkontaktfläche 12a durch Ausbildung eines reibschlüssigen Kontakts in die Verdrehrichtung V relativ zur Innenkontaktfläche 12b verdreht wird. Die benachbart zu den jeweiligen Klemmkörpern 12 liegenden Zwischenelemente 3 - beispielsweise die Zwischenelemente 3a und 3b bezüglich des in Fig. 4 mit dem Bezugszeichen versehenen Klemmkörper 12 - sind mit dem Klemmkörper fest verbunden und verformen sich aufgrund ihres elastischen Werkstoffverhaltens bei der Verschiebung des Klemmkörpers 12 zwischen den beiden Positionen entsprechend. Gleichzeitig wird während dieser Verformung der Zwischenelemente 3a, 3b aufgrund deren inneren Reibung eine Dämpfung der auftretenden Drehschwingungen erzeugt.

Ferner ist es möglich, die benachbart zueinander liegenden Zwischenelemente 3a und 3b aus verschiedenen Werkstoffen, insbesondere aus Werkstoffen mit unterschiedlicher Elastizität, herzustellen.

Fig. 5 zeigt eine weitere Ausführungsform eines Drehschwingungsdämpfers 1. Die benachbart zueinander liegenden Klemmkörper 22 und 32 sind in entgegengesetzte Richtungen zueinander verkippt in das Zwischenelement 3 eingeformt. Durch eine derartige bezüglich der radialen Richtung verkippte Anordnung der Klemmkörper 22 und 32 zueinander ist der in Fig. 5 dargestellte Drehschwingungsdämpfer derart ausgestaltet, dass er in beide Drehrichtungen ein erhöhtes Drehmoment übertragen kann.

Wie in Fig. 4 sind die Klemmkörper 22 und 32 in Fig. 5 zugleich in einer ersten Position und - die erste Position teilweise überlagernd - in einer zweiten Position, in der die Klemmkörper 22 und 32 durch ein Verschieben in Richtung der Verdrehrichtung V gebracht wurden, dargestellt. Mit den Klemmkörpern 22 verformt sich auch das Zwischenelement 3 in Fig. 5 entsprechend, wodurch die Dämpfung der auftretenden Drehschwingungen ermöglicht wird.

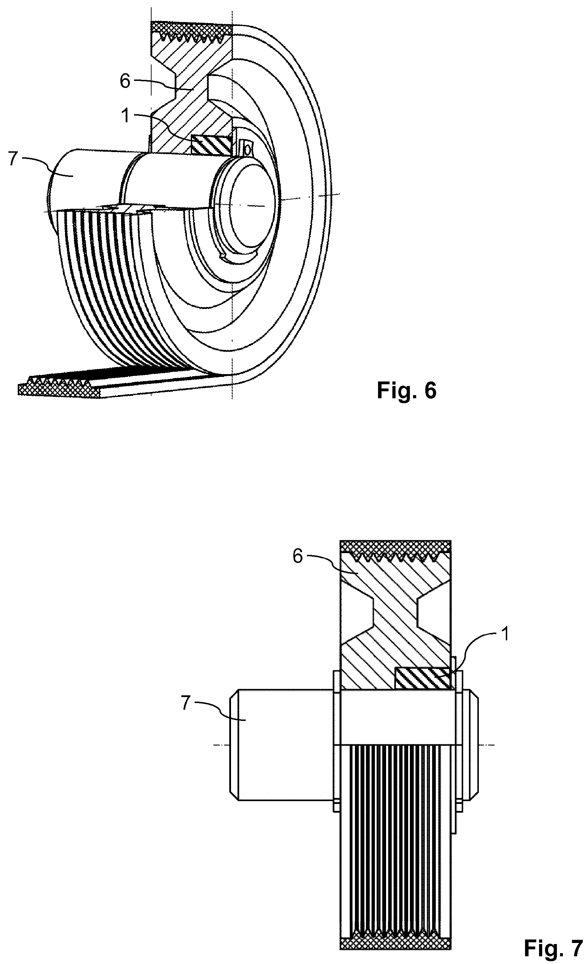

In Fig. 6 und Fig. 7 ist beispielhaft ein Anwendungsfall des Drehschwingungsdämpfers 1 dargestellt. Eine Riemenscheibe 6 sitzt mit Schiebesitz auf der Welle 7. Zwischen der zylindrischen Innenfläche der Riemenscheibe 6 und der zylindrischen Außenfläche der Welle 7 ist ein Drehschwingungsdämpfer 1 angebracht. Damit ist eine unwucht- und schlagfreie Montage der Riemenscheibe 6 sichergestellt. Außerdem erlaubt der Drehschwingungsdämpfer 1 die Übertragung eines Drehmoments zwischen der Riemenscheibe 6 und der Welle 7. Zugleich wird durch den Drehschwingungsdämpfer 1 gewährleistet, dass eventuell auftretende Drehschwingungen gedämpft werden.

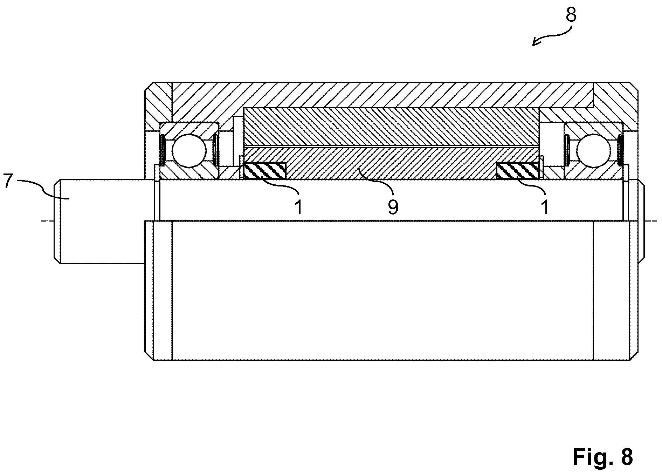

Fig. 8 zeigt eine Teilschnittdarstellung eines weiteren Einbauspeispiels, in dem zwei Drehschwingungsdämpfer 1 in einen Elektromotor 8, wie er beispielsweise in Motorspindeln verwendet wird, eingebaut ist. Der Stator 9 des Elektromotors 8 ist nicht auf die Welle 7 aufgepresst, sondern sitzt mit Schiebesitz auf der Welle 7. Das vom Elektromotor 8 erzeugte Drehmoment wird über die Drehschwingungsdämpfer 1 auf die Welle 7 übertragen.

Bei einem Elektromotor 8 der in beiden Drehrichtungen betrieben wird, könnten hierbei beispielsweise zwei entgegengesetzt wirkende Einweg-Drehschwingungsdämpfer verwendet werden.

### BEZUGSZEICHENLISTE

- 1: Drehschwingungsdämpfer
- 2: Klemmkörper
- 3, 3a, 3b: Zwischenelement
- 4: Maschinenteil
- 5: Maschinenteil
- 6: Riemenscheibe
- 7: Welle
- 8: Elektromotor
- 9: Stator
- 12: Klemmkörper
- 12a: Außenkontaktfläche
- 12b: Innenkontaktfläche
- 22: Klemmkörper
- 22a: Außenkontaktfläche
- 22b: Innenkontaktfläche
- 32: Klemmkörper
- V: Verdrehrichtung

## Patentansprüche

1. Drehschwingungsdämpfer (1) zur Kopplung zweier koaxial zueinander angeordneter Maschinenteile, insbesondere zur Koppelung einer zylindrischen Innenfläche eines ersten Maschinenteils (5) mit einer zylindrischen Außenfläche eines zweiten Maschinenteils (4), wobei der Drehschwingungsdämpfer (1) eine Vielzahl von Klemmkörpern (2) und eine Vielzahl von Zwischenelementen (3, 3a, 3b) aufweist,
und wobei die Zwischenelemente (2, 12, 22, 32) eine höhere Elastizität als die Klemmkörper (3, 3a, 3b) besitzen und zwischen benachbarten Klemmkörpern (3, 3a, 3b) angeordnet sind.
**dadurch gekennzeichnet, dass**
die Zwischenelemente (3, 3a, 3b) den in radialer Richtung zwischen den Klemmkörpern (2) vorhandenen Bereich vollständig ausfüllen.

2. Drehschwingungsdämpfer (1) nach Anspruch 1, wobei jeder Klemmkörper (2, 12, 22, 32) eine Außenkontaktfläche (12a, 12b) zur Ausbildung eines reibschlüssigen Kontakts mit einer Außenklemmbahn, insbesondere mit einer zylindrischen Innenfläche eines ersten Maschinenteils (5), und einer Innenkontaktfläche (12b, 22b) zur Ausbildung eines reibschlüssigen Kontakts mit einer Innenklemmbahn, insbesondere mit einer zylindrischen Außenfläche eines zweiten Maschinenteils (4), aufweist.

3. Drehschwingungsdämpfer (1) nach einem der vorhergehenden Ansprüche, wobei die Zwischenelemente (3, 3a, 3b) derart ausgebildet sind, die Klemmkörper (2, 12, 22, 32) in ihrer Lage zu fixieren und abzufedern.

4. Drehschwingungsdämpfer (1) nach einen der vorhergehenden Ansprüche, wobei die Zwischenelemente (3, 3a, 3b) mit den Klemmkörpern (2, 12, 22, 32) verbunden, insbesondere stoffschlüssig verbunden, sind.

5. Drehschwingungsdämpfer (1) nach einen der vorhergehenden Ansprüche, wobei die Zwischenelemente (3, 3a, 3b) in ihrer Kontur der Kontur der benachbarten Klemmkörper (2, 12, 22, 32) entsprechen.

6. Drehschwingungsdämpfer (1) nach einem der vorhergehenden Ansprüche, wobei mindestens ein Klemmkörper (2, 12, 22, 32) gegenüber der radialen Richtung verkippt zwischen benachbarten Zwischenelementen (3, 3a, 3b) angeordnet ist.

7. Drehschwingungsdämpfer (1) nach einem der vorhergehenden Ansprüche, wobei zwei benachbart zueinander angeordnete Klemmkörper (22, 32) jeweils in entgegengesetzter Richtung gegenüber der radialen Richtung verkippt in die Zwischenelemente (3) eingebunden sind.

8. Drehschwingungsdämpfer (1) nach einen der vorhergehenden Ansprüche, wobei die Zwischenelemente (3, 3a, 3b) aus mehreren unterschiedlichen Werkstoffen bestehen.

9. Drehschwingungsdämpfer (1) nach einen der vorhergehenden Ansprüche, wobei die Elastizität mindestens eines Zwischenelements (3, 3a, 3b) entlang der radialen Richtung variiert.

10. Drehschwingungsdämpfer (1) nach einen der vorhergehenden Ansprüche, wobei die Zwischenelemente (3, 3a, 3b) zumindest teilweise aus einem Silikon, einem Elastomer, einem thermoplastischen Polymer und/oder einem duroplastischen Polymer bestehen.

11. Drehschwingungsdämpfer (1) nach einen der vorhergehenden Ansprüche, wobei der Drehschwingungsdämpfer (1) bandförmig ausgebildet ist.

12. Drehschwingungsdämpfer (1) nach einen der vorhergehenden Ansprüche 1 bis 11, wobei der Drehschwingungsdämpfer (1) ringförmig ausgebildet ist.

13. Spindel, insbesondere Motorspindel, mit einem Drehschwingungsdämpfer (1) nach einem der Ansprüche 1 - 12.

## Claims

1. Torsional vibration damper (1) for coupling two machine parts arranged coaxially with respect to each other, in particular for coupling a cylindrical inner surface of a first machine part (5) to a cylindrical outer surface of a second machine part (4), wherein the torsional vibration damper (1) has a multiplicity of clamping bodies (2) and a multiplicity of intermediate elements (3, 3a, 3b), and wherein the intermediate elements (2, 12, 22, 32) are more elastic than the clamping bodies (3, 3a, 3b) and are arranged between adjacent clamping bodies (3, 3a, 3b),
**characterized in that** the intermediate elements (3, 3a, 3b) completely fill the region present in the radial direction between the clamping bodies (2).

2. Torsional vibration damper (1) according to Claim 1, wherein each clamping body (2, 12, 22, 32) has an outer contact surface (12a, 12b) for forming frictional contact with an outer clamping track, in particular with a cylindrical inner surface of a first machine part (5), and an inner contact surface (12b, 22b) for forming frictional contact with an inner clamping track, in particular with a cylindrical outer surface of a second machine part (4).

3. Torsional vibration damper (1) according to either of the preceding claims, wherein the intermediate elements (3, 3a, 3b) are designed so as to fix the clamping bodies (2, 12, 22, 32) in position and to cushion said clamping bodies.

4. Torsional vibration damper (1) according to one of the preceding claims, wherein the intermediate elements (3, 3a, 3b) are connected to the clamping bodies (2, 12, 22, 32), in particular are connected thereto in a cohesively bonded manner.

5. Torsional vibration damper (1) according to one of the preceding claims, wherein the intermediate elements (3, 3a, 3b) correspond in contour to the contour of the adjacent clamping bodies (2, 12, 22, 32).

6. Torsional vibration damper (1) according to one of the preceding claims, wherein at least one clamping body (2, 12, 22, 32) is arranged tilted in relation to the radial direction between adjacent intermediate elements (3, 3a, 3b).

7. Torsional vibration damper (1) according to one of the preceding claims, wherein two clamping bodies (22, 32) arranged adjacent to each other are bonded each tilted in an opposite direction in relation to the radial direction into the intermediate elements (3).

8. Torsional vibration damper (1) according to one of the preceding claims, wherein the intermediate elements (3, 3a, 3b) consist of a plurality of different materials.

9. Torsional vibration damper (1) according to one of the preceding claims, wherein the elasticity of at least one intermediate element (3, 3a, 3b) varies along the radial direction.

10. Torsional vibration damper (1) according to one of the preceding claims, wherein the intermediate elements (3, 3a, 3b) are at least partially composed of a silicone, an elastomer, a thermoplastic polymer and/or a thermosetting polymer.

11. Torsional vibration damper (1) according to one of the preceding claims, wherein the torsional vibration damper (1) is of strip-shaped design.

12. Torsional vibration damper (1) according to one of the preceding Claims 1 to 11, wherein the torsional vibration damper (1) is of annular design.

13. Spindle, in particular motor spindle, with a torsional vibration damper (1) according to one of Claims 1-12.

## Revendications

1. Amortisseur de vibrations de torsion (1) pour l'accouplement de deux parties de machine disposées coaxialement l'une par rapport à l'autre, en particulier pour l'accouplement d'une surface interne cylindrique d'une première partie de machine (5) à une surface externe cylindrique d'une deuxième partie de machine (4), l'amortisseur de vibrations de torsion (1) présentant une pluralité de corps de serrage (2) et une pluralité d'éléments intermédiaires (3, 3a, 3b), et les éléments intermédiaires (2, 12, 22, 32) présentant une plus grande élasticité que les corps de serrage (3, 3a, 3b) et étant disposés entre des corps de serrage (3, 3a, 3b) adjacents.

2. Amortisseur de vibrations de torsion (1) selon la revendication 1, dans lequel chaque corps de serrage (2, 12, 22, 32) présente une surface de contact externe (12a, 12b) pour réaliser un contact par engagement par friction avec une piste de serrage extérieure, en particulier avec une surface interne cylindrique d'une première partie de machine (5) et une surface de contact interne (12b, 22b) pour réaliser un contact par engagement par friction avec une piste de serrage interne, en particulier avec une surface externe cylindrique d'une deuxième partie de machine (4).

3. Amortisseur de vibrations de torsion (1) selon l'une quelconque des revendications précédentes, dans lequel les éléments intermédiaires (3, 3a, 3b) sont réalisés de manière à fixer en position et supporter sur ressort les corps de serrage (2, 12, 22, 32).

4. Amortisseur de vibrations de torsion (1) selon l'une quelconque des revendications précédentes, dans lequel les éléments intermédiaires (3, 3a, 3b) sont connectés aux corps de serrage (2, 12, 22, 32), en particulier par engagement par liaison de matière.

5. Amortisseur de vibrations de torsion (1) selon l'une quelconque des revendications précédentes, dans lequel les éléments intermédiaires (3, 3a, 3b) ont un contour qui correspond au contour des corps de serrage adjacents (2, 12, 22, 32).

6. Amortisseur de vibrations de torsion (1) selon l'une quelconque des revendications précédentes, dans lequel au moins un corps de serrage (2, 12, 22, 32) est disposé par rapport à la direction radiale de manière basculée entre des éléments intermédiaires adjacents (3, 3a, 3b).

7. Amortisseur de vibrations de torsion (1) selon l'une quelconque des revendications précédentes, dans lequel deux corps de serrage disposés à côté l'un de l'autre (22, 32) sont incorporés dans les éléments intermédiaires (3) de manière à chaque fois basculée dans une direction opposée par rapport à la direction radiale.

8. Amortisseur de vibrations de torsion (1) selon l'une quelconque des revendications précédentes, dans lequel les éléments intermédiaires (3, 3a, 3b) se composent de plusieurs matériaux différents.

9. Amortisseur de vibrations de torsion (1) selon l'une quelconque des revendications précédentes, dans lequel l'élasticité d'au moins un élément intermédiaire (3, 3a, 3b) varie le long de la direction radiale.

10. Amortisseur de vibrations de torsion (1) selon l'une quelconque des revendications précédentes, dans lequel les éléments intermédiaires (3, 3a, 3b) se composent au moins en partie d'une silicone, d'un élastomère, d'un polymère thermoplastique et/ou d'un polymère plastique.

11. Amortisseur de vibrations de torsion (1) selon l'une quelconque des revendications précédentes, dans lequel l'amortisseur de vibrations de torsion (1) est réalisé en forme de bande.

12. Amortisseur de vibrations de torsion (1) selon l'une quelconque des revendications 1 à 11, dans lequel l'amortisseur de vibrations de torsion (1) est réalisé sous forme annulaire.

13. Broche, en particulier broche de moteur, comprenant un amortisseur de vibrations de torsion (1) selon l'une quelconque des revendications 1 à 12.
